# EUROPÄISCHE PATENTANMELDUNG

(11) **EP 3 644 555 A1**
(43) Veröffentlichungstag der Anmeldung: **29.04.2020**
(21) Anmeldenummer: 18202624.5
(22) Anmeldetag: 25.10.2018
(51) Int. Cl.: H04L 12/24, H04L 12/911, H04L 12/927

(54) **VERFAHREN ZUR DATENKOMMUNIKATION IN EINEM INSBESONDERE INDUSTRIELLEN NETZWERK, STEUERUNGSVERFAHREN, VORRICHTUNG, COMPUTERPROGRAMM UND COMPUTERLESBARES MEDIUM**

(71) Anmelder: Siemens Aktiengesellschaft, 80333 München (DE)
(72) Erfinder: Fischer, Thomas, 91058 Erlangen (DE); Höme, Stephan, 91126 Schwabach (DE); Jung, Konstantin, 90537 Feucht (DE); Kerschbaum, Sven, 90768 Fürth (DE); Volkmann, Frank, 90475 Nürnberg (DE)

(57) **Zusammenfassung**

Die Erfindung betrifft ein Verfahren zur Datenkommunikation in einem insbesondere industriellen Netzwerk (7), bei dem überwacht wird, ob eines oder mehrere Unicast-Szenarien, in dem oder in denen von einem Sender (1) stammende Datenpakete (4) insbesondere gemäß UDP oder TCP/IP an genau einen Empfänger (3) übertragen werden, und/oder eines oder mehrere Multicast-Szenarien (6), in dem oder in denen von einem Sender (1) stammende Datenpakete (4) insbesondere gemäß UDP oder TCP/IP an mehrere Empfänger (3) übertragen werden, vorliegen, und für den Fall, dass eines oder mehrere Unicast- und/oder Multicast-Szenarien (6) vorliegen, das Sendeverhalten dieser beobachtet und insbesondere analysiert wird, und für den Fall, dass in einem Unicast- oder Multicast-Szenario (6) ein typisches Sendeverhalten vorliegt, automatisch ein Stream (12) für die Datenübertragung in diesem Szenario (6) eingerichtet und genutzt wird, wobei von dem typischen Sendeverhalten dieses Szenarios (6) wenigstens ein Dienstgüte-Parameter für den Stream (12) abgeleitet wird. Darüber hinaus betrifft die Erfindung ein Steuerungsverfahren, eine Vorrichtung, ein Computerprogramm und ein computerlesbares Medium.

## Beschreibung

Die Erfindung betrifft ein Verfahren zur Datenkommunikation in einem insbesondere industriellen Netzwerk. Darüber hinaus betrifft die Erfindung ein Steuerungsverfahren, eine Vorrichtung, ein Computerprogramm und ein computerlesbares Medium.

Insbesondere im Bereich der industriellen Kommunikation ist eine gesicherte, vorhersagbare Kommunikation essentiell. Dies kann beispielsweise für den Datenverkehr in Kommunikationsnetzwerken gelten, welche Endgeräte industrieller Automatisierungsanlagen, beispielsweise speicherprogrammierbare Steuerung (SPS), IO-Geräte usw., miteinander verbinden.

Time Sensitive Networking (TSN) bezeichnet eine Reihe von Standards, die den Bridging Standard IEEE 802.1Q um Mechanismen zur Übertragung echtzeitkritischer Daten über Ethernet-Netze erweitert. Zu den genannten Standards gehören beispielsweise Zeitsynchronisation (IEEE 802.1AS-Rev), Frame Preemption (IEEE 802.1Qbu) und Reservierung (IEEE 802.1Qca, IEEE 802.1Qcc) sowie weitere Standards.

Mit dem Time Sensitive Networking ist ein Standard definiert, der die Qualität (Quality of Service - QoS, im Deutschen auch als Dienstgüte bezeichnet) in einem Netzwerk in Form von Streams garantiert. Ein Stream stellt eine geschützte Kommunikationsverbindung von einem eine Quelle bzw. einen Sender darstellenden Talker, zu einem oder mehreren Senken bzw. Empfänger darstellenden Listenern dar.

Für den Erhalt einer oder mehrerer geschützter Verbindungen, also eines oder mehrerer Streams, werden vor der eigentlichen Übertragung der Daten Netzwerkressourcen reserviert, was unter Verwendung eines Reservierungsprotokolls möglich ist.

"Multiple Listeners per Stream" wurde in AVB eingeführt, um die Anzahl von Echtzeit-Datenflüssen (IEEE802 nennt diese "Stream") von einer Quelle (Talker) zu mehreren Zielen (Listenern) zu reduzieren. Konkret wird die Datenübertragung von einem Talker an mehrere Listener über nur einen Stream ermöglicht.

TSN bietet die notwendigen Fähigkeiten einer gesicherten, vorhersagbaren Kommunikation, die für das industrielle Umfeld besonders wichtig sind, dies muss aber in den Applikationen berücksichtigt sein. Die Konfiguration solcher Netzwerke ist sehr aufwendig und setzt in der Regel entsprechende Tool-Unterstützungen voraus.

TCP/IP- bzw. UDP-Kommunikationen setzen auf Best-Effort-Mechanismen auf, die dem Postulat der vorhersagbaren Kommunikation widersprechen. Diese sind allerdings vergleichsweise einfach zu konfigurieren und anzuwenden.

Der Anmelderin ist bekannt, dass bisher oftmals entweder auf die Sicherung/Vorhersagbarkeit verzichtet wurde bzw. werden musste, oder aber der erhebliche Mehraufwand, den eine TSN-Konfiguration erfordert, in Kauf genommen wurde. Dies bedeutet insbesondere, dass es Applikationen gibt, die nicht im TSN-Kontext operieren können, es sei denn, die Applikation wird verändert, was in der Regel jedoch nicht möglich ist.

Ausgehen davon besteht eine Aufgabe der vorliegenden Erfindung darin, ein Verfahren der eingangs genannten Art anzugeben, welches eine gesicherte, vorhersagbare Kommunikation auch für Anwendungen ermöglicht, die von Hause aus nicht TSN-fähig bzw. nicht für TSN konfiguriert sind, und welches sich mit vertretbarem Aufwand durchführen lässt.

Diese Aufgabe wird gelöst durch ein Verfahren zur Datenkommunikation in einem insbesondere industriellen Netzwerk, bei dem überwacht wird, ob eines oder mehrere Unicast-Szenarien, in dem oder in denen von einem Sender stammende Datenpakete insbesondere gemäß UDP oder TCP/IP an genau einen Empfänger übertragen werden, und/oder eines oder mehrere Multicast-Szenarien, in dem oder in denen von einem Sender stammende Datenpakete insbesondere gemäß UDP oder TCP/IP an mehrere Empfänger übertragen werden, vorliegen, und für den Fall, dass eines oder mehrere Unicast- und/oder Multicast-Szenarien vorliegen, das Sendeverhalten dieser beobachtet und insbesondere analysiert wird, und für den Fall, dass in einem Unicast- oder Multicast-Szenario ein typisches Sendeverhalten, welches sich insbesondere durch einen oder mehrere in einem vorgegebenen Bereich liegende Sende-Parameter auszeichnet, vorliegt, automatisch ein Stream für die Datenübertragung in diesem Szenario eingerichtet und genutzt wird, wobei von dem typischen Sendeverhalten, insbesondere von wenigstens einem beobachteten Sende-Parameter dieses Szenarios wenigstens ein Dienstgüte-Parameter für den Stream abgeleitet wird.

Die Idee der vorliegenden Erfindung besteht mit anderen Worten darin, den Datenverkehr in einem Netzwerk zu beobachten und zu analysieren und für den Fall, dass die Beobachtung ergibt, dass eines oder mehrere Unicast- bzw. eines oder mehrere Multicast-Szenarien mit einem typischen Sendeverhalten vorliegen, dieses bzw. diese automatisch in einen TSN-Stream zu ändern. Die Beobachtung bzw. Analyse des Datenverkehrs erfolgt insbesondere durch das Netzwerk selber bzw. durch einen oder mehrere geeignete Teilnehmer des Netzwerkes.

Wird bei bzw. in einem beobachteten Unicast- und/oder Multicast-Szenario ein typisches Sendeverhalten, beispielsweise ein zyklisches Senden/Übertragen von Datenpaketen und/oder eine maximale Blocklänge erkannt, so wird diese Information erfindungsgemäß in einen oder mehrere entsprechenden Dienstgüte-, also Quality-of-Service- bzw. QoS-Paramater umgewandelt, zum Beispiel ein Sendeintervall, eine maximale Framegröße oder dergleichen, und ein entsprechender Stream wird automatisch eingerichtet und dann für die Datenübertragung in dem Uni- bzw. Multicast-Szenario genutzt. Der Stream wird dabei für bzw. den zu dem jeweiligen Uni- oder Multicast-Szenario gehörigen Teilnehmern, also dem einen Sender und einen oder mehreren zugehörigen Empfänger(n), der oder die bereits Daten von dem Sender empfangen haben, bevor der Stream erzeugt wurde, eingerichtet.

Die Analyse des Verkehrs und die Zuordnung von QoS-Anforderungen stellen praktisch eine Lernphase des Netzwerkes dar, an welche sich die automatische Stream-Erzeugung anschließt.

Durch die erfindungsgemäße Vorgehensweise kann nicht nur eine Stabilisierung eines Best-Effort-Netzwerkes erreicht werden (insbesondere, indem die gegenseitige Beeinflussung der Kommunikationsteilnehmer minimiert wird), sondern es kann auch zusätzlich das Senden zu einem garantierten Zeitpunkt erreicht werden, und zwar ohne, dass eine betroffene Applikation dies explizit konfigurieren muss. Somit kann eine automatische, signifikante Verbesserung des Jitter-Verhaltens der Applikation erzielt werden.

Es wird eine Nutzung von TSN-Mechanismen zur Verbesserung des Kommunikationsverhaltens in einem Netzwerk möglich, ohne dass dies in der Applikation bzw. den Applikationen vorausgesetzt wird. Applikationen können sich, wenn das erfindungsgemäße Verfahren durchgeführt wird, verhalten insbesondere wie eine herkömmliche TCP/IP- bzw. UDP-Kommunikation, kommen aber trotzdem in den Genuss der Vorteile von TSN. So wird ein Bandbreitenschutz für Echtzeit-Anwendungen ohne Anpassung der jeweiligen Anwendung möglich. Eine Nutzung der Vorteile von TSN wird so auch für Legacy-Applikationen möglich, insbesondere auch solche, die von Hause aus kein TSN unterstützen.

Da die Ressourcenzuteilung dynamisch im Lichte des tatsächlichen momentanen Bedarfs erfolgt, kann weiterhin eine optimale Bandbreitennutzung erzielt werden.

Besonders geeignet ist das erfindungsgemäße Verfahren für UDP-Uni- und/oder Multicast-Szenarien, insbesondere, um für existierenden Datenverkehr gemäß UDP automatisch Streams einzurichten.

Selbstverständlich können im Rahmen der Durchführung des erfindungsgemäßen Verfahrens zwei oder mehr Unicast- und/oder Multicast-Szenarien mit einem typischen Sendeverhalten in einem Netzwerk beobachtet werden. Dann wird bevorzugt für jedes beobachtete Unicast- oder Multicast-Szenario mit typischem Sendeverhalten automatisch ein eigener Stream eingerichtet.

Bevorzugt erfolgt eine Beobachtung auf Unicast- und/oder Multicast-Szenarien, bei denen die Übertragung der Datenpakete von dem Sender an den einen oder die mehreren Empfänger gemäß UDP, also dem User Datagram Protocol, welches u.a. in RFC 768 (Request for Comments Nr. 768 der IETF, welcher unter https://tools.ietf.org/html/rfc768 erhältlich ist) behandelt ist, oder gemäß TCP, also Transmission Control Protocol, welches u.a. in RFC 793 (https://tools.ietf.org/html/rfc793) behandelt ist, besonders bevorzugt gemäß TCP/IP, also Transmission Control Protocol/Internet Protocol, welches u.a. in RFC 1180 (https://tools.ietf.org/html/rfc1180) behandelt ist.

Eine bevorzugte Ausführungsform des erfindungsgemäßen Verfahrens zeichnet sich dadurch aus, dass ein typisches Sendeverhalten eines Unicast- oder Multicast-Szenarios durch ein zyklisches Senden von Datenpaketen von dem Sender an den oder die Empfänger des Uni- oder Multicast-Szenarios gegeben ist. Es hat sich als besonders geeignet erwiesen, automatisch Streams einzurichten, wenn ein zyklisches Senden von Paketen vorliegt.

Alternativ oder zusätzlich kann vorgesehen sein, dass als Sende-Parameter eines Unicast- oder Multicast-Sezenarios eine Zykluszeit und/oder eine insbesondere maximale Paketlänge beobachtet wird. Insbesondere für den Fall, dass eine beobachtete Zykluszeit bzw. maximale Paketlänge innerhalb eines vorgegebenen Bereiches liegt, wird dann automatisch ein Stream eingerichtet und genutzt.

In Abhängigkeit des beobachteten typischen Sendeverhaltens, insbesondere in Abhängigkeit wenigstens eines beobachteten Sende-Parameters, also beispielsweise einer Zykluszeit und/oder maximalen Paketlänge, mit der das Senden in einer beobachteten Uni- oder Multicast-Beziehung erfolgt, können als Dienstgüte-Parameter für den Stream z.B. ein Sendeintervall und/oder eine maximale Framegröße und/oder eine Stream-Klasse und/oder eine maximale Anzahl von Bytes pro Zyklus abgeleitet werden. Dies hat sich als besonders geeignet erwiesen.

Uni- bzw. Multicast-Szenarien bzw. -Gruppen können insbesondere über den oder die Empfänger beobachtet bzw. aufgefunden werden.

Der bzw. die Empfänger von Unicast- und/oder Multicast-Szenarien bzw. -Gruppen können beispielsweise durch eine Analyse des IGMP-Protokolls ermittelt werden. Die Abkürzung IGMP steht dabei für das Internet Group Management Protocol, das aus dem Stand der Technik vorbekannt ist (siehe beispielsweise RFC 3376, https://tools.ietf.org/html/rfc3376) und in der Regel der Organisation von Multicast-Gruppen dient.

Auch ist es möglich, dass bei der automatischen Einrichtung eines Streams für ein Unicast- oder Multicast-Szenario die Multicast-Adresse dem oder den zu dem Szenario gehörigen Empfängern bekannt gegeben wird. Die Identifikation des oder der Empfänger kann beispielsweise mithilfe der Multicast-Adresse geschehen, da diese sich auf der zugehörigen Multicast-Gruppe registrieren.

Zweckmäßiger Weise werden nur Streams für Uni- bzw. Multicast-Szenarien eingerichtet, die bisher kein TSN genutzt haben, insbesondere nur für Applikationen, die von Hause aus kein TSN, bevorzugt kein TSN-Protokoll für die Weiterleitung ihrer Pakete nutzen (können).

Entsprechend kann in bevorzugter Ausgestaltung vorgesehen sein, dass ermittelt wird, ob bei den beobachteten Unicast- und/oder Multicast-Szenarien die Weiterleitung der Datenpakete von dem Sender zu dem oder den Empfängern bereits über einen Stream, insbesondere unter Nutzung eines TSN-Protokolls erfolgt, und ein Stream für ein Unicast- oder Multicast-Szenario mit typischem Sendeverhalten nur in demjenigen Falle eingerichtet wird, dass bei diesem die Datenübertragung nicht bereits über einen Stream erfolgt.

Was die Einrichtung des Streams in Reaktion auf die Beobachtung einer Uni- bzw. Multicast-Sendebeziehung und Analyse des zu diesem gehörigen Verkehrs angeht, kann auf die aus dem Stand der Technik hinlänglich vorbekannten Mechanismen zurückgegriffen werden. Die Stream-Einrichtung erfolgt insbesondere genauso, wie für TSN vorbekannt, wobei jedoch, was die Wahl bzw. Einstellung von einem oder mehreren Stream- bzw. TSN-Parametern angeht, diese von dem beobachteten und insbesondere analysierten Verkehr des Unicast- bzw. Multicast-Szenarios, also dem Verkehr zwischen dem Sender und dem oder den Empfängern dieses, abgeleitet werden.

Für die Stream-Einrichtung kann in an sich bekannter Weise auf ein Reservierungsprotokoll zurückgegriffen werden. Durch die Verwendung eines Reservierungsprotokolls wird die komplexe Konfiguration automatisch im Netzwerk durchgeführt. Bei Ressourcen, insbesondere Netzwerkressourcen, die für eine Übertragung via Stream reserviert werden, kann es sich beispielsweise um Adresstabelleneinträge und/oder Framebuffer und/oder transmit time slices und/oder Bandbreite und/oder Jitter und/oder Latenz handeln.

Als Stream-Reservierungsprotokolle können zum Beispiel das aus dem Stand der Technik vorbekannte Stream Reservation Protocol, abgekürzt SRP (siehe IEEE802.1Qat sowie siehe IEEE802.1Q, Absatz 35) und/oder Multiple Stream Registration Protocol, abgekürzt MSRP (siehe IEEE802.1Q, Absatz 35) zum Einsatz kommen.

Ein weiterer Gegenstand der vorliegenden Erfindung ist ein Steuerungsverfahren für einen industriellen technischen Prozess oder ein Fahrzeug, bei dem zwischen wenigstens zwei Komponenten eines Steuerungssystems, insbesondere einer bevorzugt speicherprogrammierbaren Steuerung einer industriellen Automatisierungsanlage oder eines Fahrzeuges als Sender und einem oder mehreren Aktoren als Empfänger, Daten unter Durchführung des Verfahrens nach einem der vorhergehenden Ansprüche ausgetauscht werden und auf Basis der ausgetauschten Daten eine Steuerung des industriellen technischen Prozesses oder Fahrzeugs erfolgt.

Gegenstand der Erfindung ist darüber hinaus eine Vorrichtung, die zur Durchführung des erfindungsgemäßen Verfahrens zur Datenkommunikation bzw. des erfindungsgemäßen Steuerungsverfahrens ausgebildet und eingerichtet ist. Die Vorrichtung umfasst zweckmäßiger Weise Mittel zur Durchführung der Schritte dieser Verfahren. Sie kann beispielsweise durch wenigstens einen PC gegeben sein, welcher an das Netzwerk angeschlossen ist, oder wenigstens einen solchen umfassen. Die Vorrichtung bzw. der PC kann auch Teil einer Steuerung einer Automatisierungsanlage sein. Alle teilnehmenden Komponenten sollten zweckmäßiger Weise TSN-fähig sein.

Weiterhin betrifft die Erfindung ein Computerprogramm, das Programmcodemittel zur Durchführung der Schritte des erfindungsgemäßen Verfahrens zur Datenkommunikation bzw. des erfindungsgemäßen Steuerungsverfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens zur Datenkommunikation bzw. des erfindungsgemäßen Steuerungsverfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung einer Ausführungsform des Verfahrens der vorliegenden Erfindung unter Bezugnahme auf die beiliegende Zeichnung deutlich. Darin ist
- FIG 1: eine rein schematische Teildarstellung eines industriellen Netzwerkes; und
- FIG 2: in Gegenüberstellung ein UDP-Multicast-Szenario mit einem Sender und drei Empfängern (oben) und das gleiche Szenario, nachdem automatisch ein geeigneter TSN-Stream eingerichtet wurde (unten).

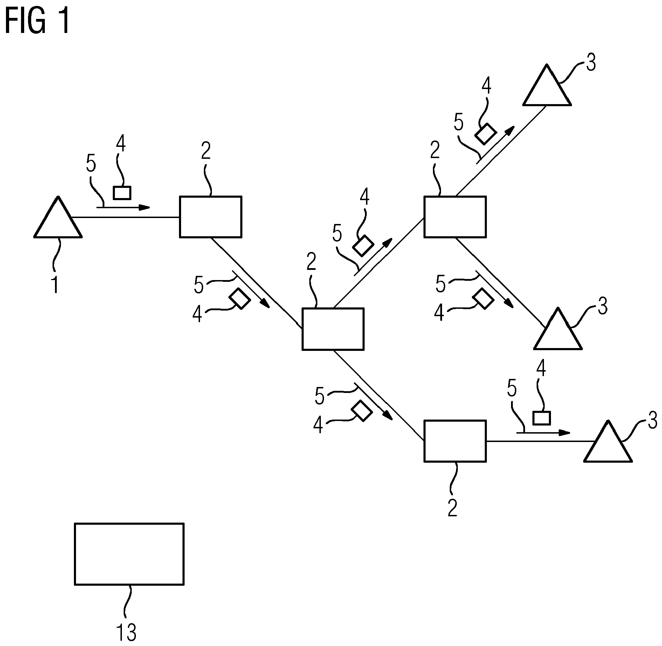

Die FIG 1 zeigt eine rein schematische Teildarstellung eines industriellen Ethernet-basierten Netzwerkes. Konkret ist ein Endgerät zu erkennen, welches einen Sender 1 darstellt, und das über mehrere Bridges 2 mit drei weiteren Endgeräten verbunden ist, die jeweils einen Empfänger 3 darstellen. Es sei angemerkt, dass weitere Sender 1 und Empfänger 3 darstellende Endgeräte sowie weitere 2 vorhanden sind, die in der Teildarstellung gemäß FIG 1 jedoch nicht gezeigt sind.

Bei dem den Sender bildenden Endgerät handelt es sich vorliegend um ein SCADA-System einer industriellen Automatisierungsanlage und die die Empfänger bildenden Endgeräte sind Controller 3, insbesondere speicherprogrammierbare Steuerungen, der Automatisierungsanlage, welche von dem SCADA-System lzyklisch Steuersignale erhalten, um auf einen in den Figuren nicht dargestellten industriellen technischen Prozess zyklisch einzuwirken. Die Abkürzung SCADA steht dabei für den englischen Ausdruck Supervisory Control and Data Acquisition. Unter SCADA-Systemen 1 versteht man insbesondere Computer-Systeme, mittels derer technische Prozesse überwacht und/oder gesteuert werden können.

Die Steuersignale werden über das Ethernet-basierte Netzwerk von dem SCADA-System 1 an die Controller 3 übertragen. Die Kommunikation der Steuersignale von dem SCADA-System 1 an die Controller 3 erfolgt dabei über Datenpakete 4, die im Netzwerk übertragen werden. Die Datenpakete 4 sind in der FIG 1 an verschiedenen Positionen im Netzwerk rein schematisch durch mit der Bezugsziffer 4 versehene Blockbildelemente angedeutet. Pfeile 5 deuten die Richtung des Datenflusses von dem SCADA-System 1 zu den mehreren Empfängern 3 an.

Diesen Abläufen liegt eine Applikation, konkret eine Steuer-Applikation zugrunde.

Die Übertragung erfolgt vorliegend gemäß UDP, also User Datagram Protocol. UDP ist ein nicht-zuverlässiges, ungeschütztes Übertragungsprotokoll, welches keine Garantien liefert.

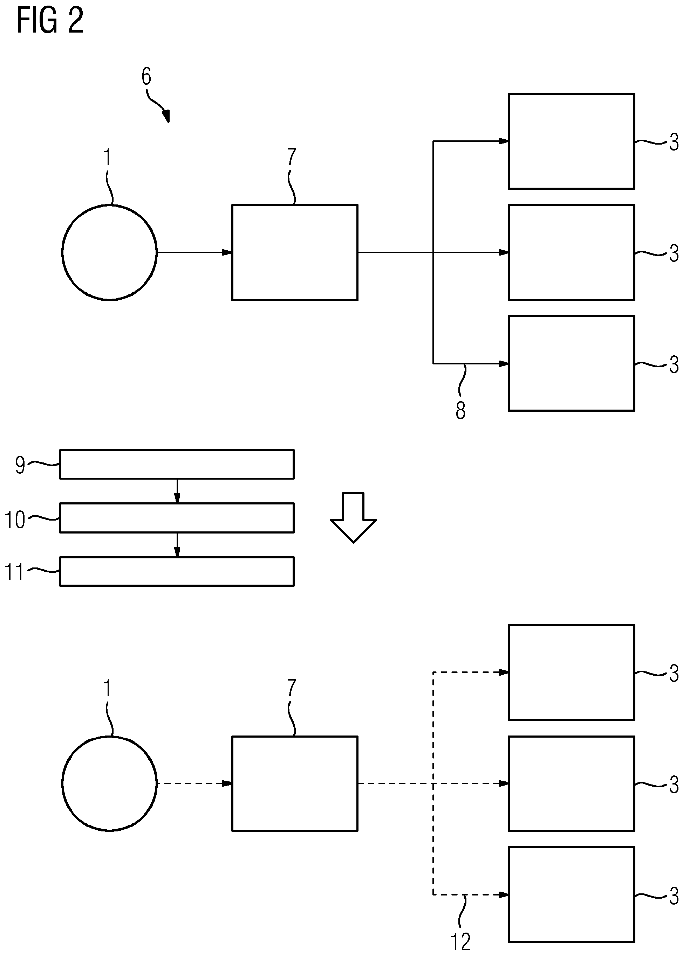

In der FIG 2 oben ist das Multicast-Szenario 6 nochmals dargestellt. Das Netzwerk ist hier nur stark vereinfacht durch ein mit dem Bezugszeichen 7 versehenes Blockelement gezeigt. Das Multicast-Szenario ist durch durchgezogene Pfeile 8 angedeutet.

In dem dargestellten industriellen Netzwerk wird eine Ausführungsform des erfindungsgemäßen Verfahrens durchgeführt.

Im Rahmen dieses wird im Betrieb laufend überwacht, ob eines oder mehrere Unicast-Szenarien und/oder eines oder mehrere Multicast-Szenarien 6, bei denen von einem Sender 1 stammende Datenpakete 4 gemäß UDP an einen oder mehrere Empfänger 3 übertragen werden, bestehen. Hierzu wird auf bekannte Mechanismen zurückgegriffen, vorliegend auf IGMP.

Vorliegend ergibt die Überwachung, dass ein Multicast-Szenario 6 existiert, in dem ein Sender, konkret das SCADA-System 1 an mehrere Empfänger 3 Datenpakete 4 gemäß UDP sendet.

Das Sendeverhalten dieses Szenarios 6 bzw. dieser Gruppe von Sender 1 und Empfängern 3 wird beobachtet und analysiert. Vorliegend wird analysiert die Häufigkeit, die Paketlänge, ob ein Intervall vorhanden ist, welches Protokoll verwendet wird, die VLAN Prio und PCP. Dies ist in der FIG 2 rein schematisch durch ein mit dem Bezugszeichen 9 versehenes Blockelement dargestellt.

Für den Fall, dass ein typisches Sendeverhalten vorliegt, welches sich insbesondere durch einen oder mehrere in einem vorgegebenen Bereich liegende Sende-Parameter auszeichnet, werden auf Basis dieses Verhaltens und insbesondere der Sende-Parameter Dienstgüte-, also QoS-Parameter für die Einrichtung eines Streams zwischen dem Sender 1 und den Empfängern 3 ermittelt bzw. abgeleitet. Dieser Schritt ist in FIG 2 - erneut rein schematisch - durch ein Blockelement dargestellt, welches mit dem Bezugszeichen 10 versehen ist. Dies erfolgt automatisch.

Vorliegend wird konkret das zyklische Senden der Datenpakete 4 beobachtet und es werden als Sende-Parameter eine Zykluszeit und/oder eine maximale Blocklänger der gesendeten Datenpakte 4 beobachtet bzw. erfasst.

Als QoS-, also Stream-Parameter werden ein Sendeintervall und eine maximale Framegröße und eine Stream-Klasse und eine maximale Anzahl von Bytes pro Zyklus abgeleitet und festgelegt.

Werden beispielsweise eine Framegröße von 108Byte und ein Intervall von 1ms als Sende-Parameter erfasst, und stehen beispielsweise folgende drei Stream-Klassen zur Verfügung Stream-Klasse A: maximale Framesize 64Byte, Zykluszeit 25µs Stream-Klasse B: maximale Framesize 128Byte, Zykluszeit 500µs Stream-Klasse C: maximale Framesize 256Byte, Zykluszeit 2ms, können die Stream-Klasse oder die Stream-Klasse B gewählt werden, wobei vorliegend Stream-Klasse A gewählt würde. Stream-Klasse C käme nicht in Frage, da die Zykluszeit zu hoch ist.

In einem nächsten Schritt wird - ebenfalls automatisch - ein Stream mit diesen Parametern, die von dem beobachteten Verkehr zwischen dem Sender 1 und den Empfängern 3 abgeleitet wurden, eingerichtet. Dieser Schritt ist in der FIG 2 durch ein mit dem Bezugszeichen 11 versehenes Element angedeutet. Der erzeugte Stream wird dann für die Datenübertragung zwischen dem Sender 1 und den Empfängern 3 genutzt. Der Sender 1 stellt dann einen Talker des Streams dar und die Empfänger 3 Listener des Streams.

In der FIG 2 unten ist das Multicast-Szenario 6 nochmals dargestellt, wobei die den Sender 1 und die Empfänger 3 verbindenden Pfeile 12 nun gestrichelt dargestellt sind, um zu verdeutlichen, dass hier nicht, wie oben, gemäß UDP sondern über den eingerichteten TSN-Stream kommuniziert wird.

Sämtliche beschriebenen Schritte erfolgen automatisch, insbesondere ohne dass ein Anwender eingreifen bzw. eine Konfiguration durchführen muss.

Der in den Figuren nicht dargestellte industrielle, technische Prozess wird auf Basis von Daten, die unter Durchführung der vorstehend beschriebenen Ausführungsform des erfindungsgemäßen Verfahrens ausgetauscht werden, gesteuert.

Die vorstehend beschriebenen Schritte können beispielsweise mittels eines dargestellten geeigneten PCs 13 durchgeführt werden, der ebenfalls an das Netzwerk 7 angeschlossen ist. Ein solcher PC 13 stellt ein Ausführungsbeispiel einer erfindungsgemäßen Vorrichtung dar.

Es versteht sich, dass für den Fall, dass in dem Netzwerk mehr als ein Multicast- Szenario 6 und auch eines oder mehrere UDP-Unicast-Szenarien mit typischem Sendeverhalten beobachtet werden, für jedes dieser Szenarien automatisch ein eigener Stream eingerichtet werden kann, bevorzugt wird, wobei der Ablauf dann jeweils so ist, wie vorstehend beispielshaft für das eine Multicast-Szenario 6 beschrieben.

Durch die vorstehend beschriebene Vorgehensweise kann nicht nur eine Stabilisierung eines Best-Effort-Netzwerkes erreicht werden, indem die gegenseitige Beeinflussung der Kommunikationsteilnehmer minimiert wird, sondern es kann auch zusätzlich das Senden zu einem garantierten Zeitpunkt erreicht werden, und zwar ohne, dass die betroffene Applikation dies explizit konfigurieren muss. Somit kann eine automatische, signifikante Verbesserung des Jitter-Verhaltens der Applikation erzielt werden.

Es wird eine Nutzung von TSN-Mechanismen zur Verbesserung des Kommunikationsverhaltens in einem Netzwerk 7 möglich, ohne dass dies in der Applikation bzw. den Applikationen vorausgesetzt wird. Applikationen können sich, wenn das erfindungsgemäße Verfahren durchgeführt wird, verhalten wie eine herkömmliche TCP/IP- bzw. UDP-Kommunikation, kommen aber trotzdem in den Genuss der Vorteile von TSN. So wird ein Bandbreitenschutz für Echtzeit-Anwendungen ohne Anpassung der jeweiligen Anwendung möglich. Eine Nutzung der Vorteile von TSN wird auch für Legacy-Applikationen möglich, insbesondere auch solche, die von Hause aus kein TSN unterstützen. Da die Ressourcenzuteilung dynamisch im Lichte des tatsächlichen momentanen Bedarfs erfolgt, kann dabei eine optimale Bandbreitennutzung erzielt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Datenkommunikation in einem insbesondere industriellen Netzwerk (7), bei dem überwacht wird, ob eines oder mehrere Unicast-Szenarien, in dem oder in denen von einem Sender (1) stammende Datenpakete (4) insbesondere gemäß UDP oder TCP/IP an genau einen Empfänger (3) übertragen werden, und/oder eines oder mehrere Multicast-Szenarien (6), in dem oder in denen von einem Sender (1) stammende Datenpakete (4) insbesondere gemäß UDP oder TCP/IP an mehrere Empfänger (3) übertragen werden, vorliegen, und für den Fall, dass eines oder mehrere Unicast- und/oder Multicast-Szenarien (6) vorliegen, das Sendeverhalten dieser beobachtet und insbesondere analysiert wird, und für den Fall, dass in einem Unicast- oder Multicast-Szenario (6) ein typisches Sendeverhalten, welches sich insbesondere durch einen oder mehrere in einem vorgegebenen Bereich liegende Sende-Parameter auszeichnet, vorliegt, automatisch ein Stream (12) für die Datenübertragung in diesem Szenario (6) eingerichtet und genutzt wird, wobei von dem typischen Sendeverhalten, insbesondere von wenigstens einem beobachteten Sende-Parameter dieses Szenarios (6) wenigstens ein Dienstgüte-Parameter für den Stream (12) abgeleitet wird.

2. Verfahren nach Anspruch 1,
**dadurch gekennzeichnet, dass**
zwei oder mehr Unicast- und/oder Multicast-Szenarien (6) mit einem typischen Sendeverhalten beobachtet werden und für jedes Unicast- oder Multicast-Szenario (6) mit typischem Sendeverhalten automatisch ein eigener Stream (12) eingerichtet wird.

3. Verfahren nach Anspruch 1 oder 2,
**dadurch gekennzeichnet, dass**
ein typisches Sendeverhalten eines Unicast- oder Multicast-Szenarios (6) durch ein zyklisches Senden von Datenpaketen (4) gegeben ist, und/oder dass als Sende-Parameter eines Unicast- oder Multicast-Szenarios (6) eine Zykluszeit und/oder eine insbesondere maximale Paketlänge beobachtet wird.

4. Verfahren nach einem der vorhergehenden Ansprüche,
**dadurch gekennzeichnet, dass**
als Dienstgüte-Parameter für den Stream (12) ein Sendeintervall und/oder eine maximale Framegröße und/oder eine Stream-Klasse und/oder eine maximale Anzahl von Bytes pro Zyklus in Abhängigkeit des beobachteten typischen Sendeverhaltens, insbesondere in Abhängigkeit wenigstens eines beobachteten Sende-Parameters abgeleitet wird.

5. Verfahren nach einem der vorhergehenden Ansprüche,
**dadurch gekennzeichnet, dass**
der oder die Empfänger (3) des oder der Unicast- und/oder Multicast-Szenarien (6) durch die Analyse des IGMP-Protokolls ermittelt werden.

6. Verfahren nach einem der vorhergehenden Ansprüche,
**dadurch gekennzeichnet, dass**
bei der automatischen Einrichtung eines Streams (12) für ein Unicast- oder Multicast-Szenario (6) die Multicast-Adresse dem oder den zu dem Szenario gehörigen Empfängern (3) bekannt gegeben wird.

7. Verfahren nach einem der vorhergehenden Ansprüche,
**dadurch gekennzeichnet, dass**
ermittelt wird, ob bei dem oder den beobachteten Unicast- und/oder Multicast-Szenarien (6) die Weiterleitung der Datenpakete (4) von dem Sender (1) zu dem oder den Empfängern (3) bereits über einen Stream (12), insbesondere unter Nutzung eines TSN-Protokolls erfolgt, und ein Stream (12) für ein Unicast- oder Multicast-Szenario (6) mit typischem Sendeverhalten nur in demjenigen Falle eingerichtet wird, dass in diesem die Datenübertragung nicht bereits über einen Stream (12) erfolgt.

8. Steuerungsverfahren für einen industriellen technischen Prozess oder ein Fahrzeug, bei dem zwischen wenigstens zwei Komponenten (1, 3) eines Steuerungssystems, insbesondere einer bevorzugt speicherprogrammierbaren Steuerung (1) einer industriellen Automatisierungsanlage oder eines Fahrzeuges als Sender und einem oder mehreren Aktoren (3) als Empfänger, Daten unter Durchführung des Verfahrens nach einem der vorhergehenden Ansprüche ausgetauscht werden und auf Basis der ausgetauschten Daten eine Steuerung des industriellen technischen Prozesses oder Fahrzeugs erfolgt.

9. Vorrichtung, die zur Durchführung des Verfahrens nach einem der Ansprüche 1 bis 8 ausgebildet und eingerichtet ist.

10. Computerprogramm umfassend Programmcode-Mittel zur Durchführung des Verfahrens nach einem der Ansprüche 1 bis 8.

11. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 8 durchzuführen.
